# EUROPEAN PATENT SPECIFICATION

(11) **EP 4 290 675 B1**
(45) Date of publication and mention of the grant of the patent: **22.10.2025**
(21) Application number: 23172646.4
(22) Date of filing: 10.05.2023
(51) Int. Cl.: H01M 50/533, H01M 50/595, H01M 50/103, H01M 50/536, H01M 50/548, H01M 50/553, H01M 50/586, H01M 10/04, H01M 50/105

(54) **BATTERY CELL AND METHOD OF MANUFACTURING THE SAME**
BATTERIEZELLE UND VERFAHREN ZUR HERSTELLUNG DAVON
ÉLÉMENT DE BATTERIE ET SON PROCÉDÉ DE FABRICATION

(30) Priority: 16.05.2022 KR 20220059598
(43) Date of publication of application: 13.12.2023
(73) Proprietor: SK On Co., Ltd., Seoul 03161 (KR)
(72) Inventor: KIM, Dong Ju, 34124 Daejeon (KR); KIM, Sang Mo, 34124 Daejeon (KR); PARK, Sun Min, 34124 Daejeon (KR); BYUN, Jae Gyu, 34124 Daejeon (KR); JEONG, Taek Eon, 34124 Daejeon (KR)
(74) Representative: Prüfer & Partner mbB Patentanwälte · Rechtsanwälte

(56) References cited:
- EP-A1- 2 485 298
- CN-A- 113 078 420
- JP-A- 2001 332 240
- JP-A- 2019 140 068
- KR-A- 20210 021 871
- US-A1- 2016 197 335

## Description

### BACKGROUND

### 1. FIELD

The present disclosure is related to a battery cell and a method of manufacturing the same.

### 2. DESCRIPTION OF RELATED ART

A secondary battery, such as a battery cell, may be charged and discharged differently from primary batteries, and may thus be applied to use in devices within various fields such as a digital camera, a mobile phone, a laptop computer, and a hybrid vehicle. Secondary batteries may include a nickel-cadmium battery, a nickel-metal hydride battery, a nickel-hydrogen battery, and a lithium secondary battery.

Generally, a secondary battery may be formed by stacking a cathode, a separator, and an anode. Also, materials thereof may be selected in consideration of battery lifespan, charge and discharge capacity, temperature properties, and stability.

A secondary battery may include a pouch-type secondary battery and a can-type secondary battery according to a material of a case accommodating an electrode assembly. In the pouch-type, an electrode assembly may be accommodated in a pouch formed of a flexible polymer material having an irregular shape. In the can-type, an electrode assembly may be accommodated in a case formed of a material such as metal or plastic and having a predetermined shape.

In a general pouch-type battery cell, an electrode lead may be connected to an electrode tab of an electrode assembly by being welded thereto. Accordingly, a space in which the electrode tab is disposed may be provided in the battery cell. European Patent Application 2485298 A1 discloses a stack type battery comprising an insulating tape made of a resin to prevent short-circuiting, wherein the insulating layer surrounds both an end of the electrode tab and an end of the electrode lead and is coupled to a joint portion. The electrode tab and the electrode lead may be bonded to each other in the joint portion, and the surface direction of the bonding portion may be parallel to a stacking direction of the electrode assembly. Published Japanese Patent Application 2019140068 A discloses a secondary battery as a power storage device comprising an electrode joint portion protected by an insulating cover that is slid from one end side in the stacking direction to the other end side. In the disclosed configuration, a first plate portion of the insulating cover is interposed between the electrode joint portion and a part of a lid.

### SUMMARY

The object of the present disclosure is to provide a battery cell which may increase energy density by reducing a space in which electrode tabs are disposed, and a method of manufacturing the same.

A battery cell according to the present disclosure includes an electrode assembly, an electrode tab drawn out from one surface of the electrode assembly, and an electrode lead to which the electrode tab is coupled, wherein a bonding portion in which the electrode tab and the electrode lead are bonded to each other is disposed to face the one surface of the electrode assembly, and wherein, in the bonding portion, an end of the electrode tab and an end of the electrode lead are disposed to be oriented in the same direction.

The battery cell further includes a protective member formed of an insulating material and covering a surface of the bonding portion.

In an embodiment of the present disclosure, the protective member may surround an end of the electrode tab and an end of the electrode lead and is coupled to the bonding portion.

In an embodiment of the present disclosure, the protective member may be formed by attaching an insulating tape to both surfaces of the bonding portion.

The protective member has an accommodation space in a form of a pocket, and the bonding portion is inserted into and accommodated in the accommodation space through an opening provided in the protective member.

In an embodiment of the present disclosure, at least a portion of the protective member may be disposed between the bonding portion and the electrode assembly.

In an embodiment of the present disclosure, the battery cell may further include a case configured to accommodate the electrode assembly and the protective member therein, wherein at least a portion of the electrode lead may be disposed externally of the case.

In an embodiment of the present disclosure, the bonding portion may include a second bonding portion formed on an end of the electrode tab and a first bonding portion bonded to and in surface-contact with the second bonding portion of the electrode lead.

In an embodiment of the present disclosure, the electrode lead may further include a lead-out portion extending from the first bonding portion and having at least a portion disposed externally of the case, and the first bonding portion and the lead-out portion may be disposed to have an angle of less than 180° therebetween.

A battery cell according to an embodiment of present disclosure may include a case, an electrode assembly accommodated in the case, an electrode tab drawn out from one surface of the electrode assembly, and an electrode lead coupled to the electrode tab and having at least a portion disposed externally of the case, wherein the electrode lead includes a first bonding portion bonded to the electrode tab and a lead-out portion extending from the first bonding portion and having at least a portion disposed externally of the case, and wherein the first bonding portion is disposed side by side with one surface of the electrode assembly, and the lead-out portion is disposed in a center of a thickness range of the electrode assembly.

In an embodiment of the present disclosure, in the bonding portion in which the electrode tab and the electrode lead are bonded to each other, an end of the electrode tab and an end of the electrode lead may be disposed to be directed in opposite directions.

A method of manufacturing a battery cell according to the present invention includes preparing an electrode lead bent along a bending line and divided into a first bonding portion and a lead-out portion, stacking an end of an electrode tab drawn out from one surface of an electrode assembly on the first bonding portion of the electrode lead; bonding the electrode tab to the first bonding portion, disposing a bonding portion in which the electrode tab and the first bonding portion are bonded to each other to face the one surface of the electrode assembly. , and disposing a protective member formed of an insulating material on a surface of the bonding the electrode tab to the first bonding portion.

In an embodiment of the present disclosure, the stacking an end of an electrode tab drawn out from one surface of an electrode assembly on the first bonding portion of the electrode lead may include stacking an end of the electrode tab and an end of the electrode lead to be oriented in the same direction in the bonding portion.

In an embodiment of the present disclosure, the disposing a bonding portion in which the electrode tab and the first bonding portion are bonded to each other to face the one surface of the electrode assembly may include disposing the first bonding portion side by side with a tap lead-out surface of the electrode assembly by rotating the electrode lead.

### BRIEF DESCRIPTION OF DRAWINGS

Certain aspects, features, and advantages of the disclosed technology are illustrated by the following detailed description with reference to the accompanying drawings.
FIG. 1 is a perspective diagram illustrating a battery cell according to an embodiment of disclosed technology;
FIG. 2 is an exploded perspective diagram illustrating the battery cell illustrated in FIG. 1;
FIG. 3 is a cross-sectional diagram illustrating a portion of the battery cell illustrated in FIG. 1;
FIG. 4 is an enlarged perspective diagram illustrating an electrode assembly and an electrode lead illustrated in FIG. 2;
FIG. 5 is an exploded perspective diagram illustrating a portion of the example in FIG. 4;
FIGS. 6 and 7 are diagrams illustrating a method of manufacturing the battery cell illustrated in FIG. 1;
FIG. 8 is a perspective diagram illustrating a portion of a battery cell according to another embodiment of disclosed technology;
FIG. 9 is an exploded perspective diagram illustrating the battery cell illustrated in FIG. 8;
FIG. 10 is a cross-sectional diagram illustrating a portion of a battery cell according to another embodiment of disclosed technology; and
FIG. 11 is a diagram illustrating a method of manufacturing the battery cell illustrated in FIG. 10.

### DETAILED DESCRIPTION

Features of the disclosed technology disclosed in this patent document are illustrated in embodiments with reference to the accompanying drawings.

In the drawings, same elements will be indicated by same reference numerals. Overlapping descriptions and detailed descriptions of known functions and elements which may unnecessarily make the gist of the present disclosure obscure will not be provided. In the accompanying drawings, a portion of elements may be exaggerated, omitted or briefly illustrated, and the sizes of the elements may not necessarily reflect the actual sizes of these elements.

In embodiments, terms such as an upper side, an upper portion, a lower side, a lower portion, a side surface, and the like, are represented based on the directions in the drawings, and may be used differently if the direction of an element is changed.

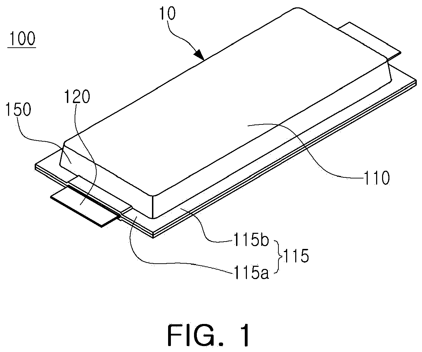

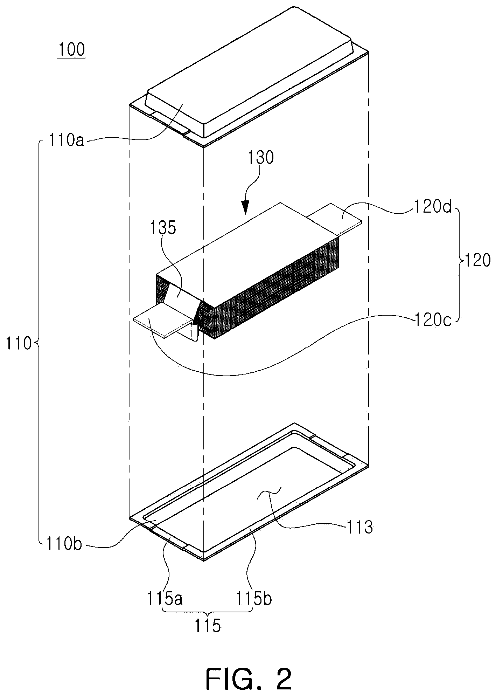

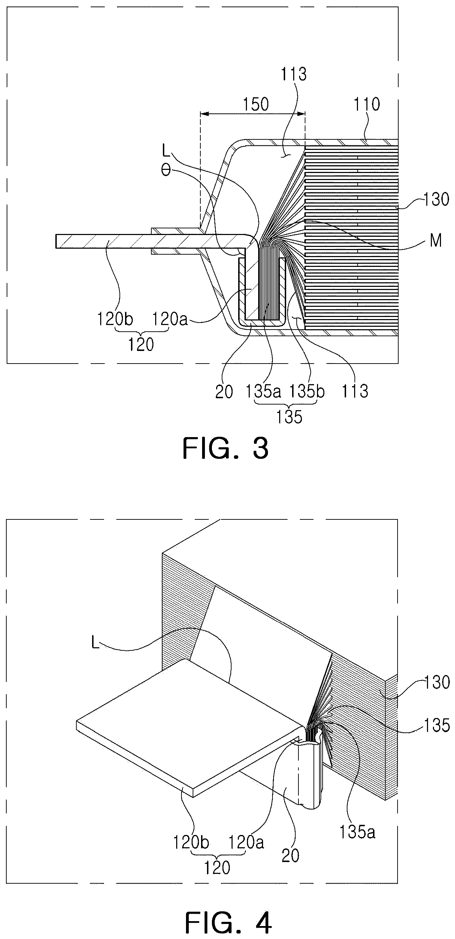

FIG. 1 is a perspective diagram illustrating a battery cell according to an embodiment. FIG. 2 is an exploded perspective diagram illustrating the battery cell illustrated in FIG. 1. FIG. 3 is a cross-sectional diagram illustrating a portion of the battery cell illustrated in FIG. 1.

Referring to FIGS. 1 to 3, the battery cell 100 according to the embodiment may include an electrode assembly 130, a case 110 accommodating the electrode assembly 130, and a protective member 20.

The battery cell 100 according to the embodiment may be a secondary battery charged and discharged, and may include a lithium ion (Li-ion) battery or a nickel metal hydride (Ni-MH) battery. A nickel metal hydride battery may be a secondary battery using nickel for a positive electrode, hydrogen occlusion alloy for a negative electrode, and aqueous alkali solution as electrolyte, and may have high capacity per unit volume, such that the battery may be used as an energy source for electric vehicles (EV) or hybrid vehicles (HEV) and may also be used in various fields such as energy storage.

The case 110 may be formed of a flexible film material. For example, the case may be formed of a material obtained by insulating the surface of a metal thin film formed of aluminum.

The case 110 may include an accommodation space 113 in which the electrode assembly 130 is accommodated on the inner side. Also, an electrode lead 120 may protrude from the outer side of the case 110.

The electrode assembly 130 may be formed in a substantially hexahedral shape and may be accommodated together with the electrolyte in the accommodation space 113 on the inner side of the case 110. The case 110 may be formed by combining the lower case 110b and the upper case 110a and sealing the accommodation space 113 by bonding edges at which the lower case 110b and the upper case 110a are in contact with each other. A thermal fusion method may be used as an edge bonding method, but an embodiment thereof is not limited thereto. Hereinafter, the bonded edge portion may be referred to as a sealing portion 115.

The sealing portion 115 may be formed in a flange shape protruding outwardly from the accommodation space 113. In the embodiment, the sealing portion 115 may include a first sealing portion 115a in which the electrode lead 120 is disposed and a second sealing portion 115b in which the electrode lead 120 is not disposed depending on the position in which the sealing portion 115 is formed.

As illustrated in FIG. 3, an electrode tab 135 may be disposed between the electrode assembly 130 and the sealing portion 115. The electrode tab 135 may electrically connect the electrode assembly 130 to the electrode lead 120, and a plurality of electrode tabs 135 may extend from the electrode assembly 130 and may be bonded to at least one of the electrode leads 120.

The electrode tab 135 may be accommodated in the terrace (150 in FIG. 3). In the embodiment, the terrace 150 may correspond to the circumference of the portion of the case 110 accommodating the electrode assembly 130. Also, in the embodiment, the terrace 150 may be defined as a portion corresponding to a region between the electrode assembly 130 and the sealing portion 115 of the case 110.

In the embodiment, the electrode tab 135 may be drawn toward the first sealing portion 115a. Accordingly, the terrace 150 in the embodiment may include a region between the electrode assembly 130 and the first sealing portion 115a.

However, even when the electrode tab 135 is not accommodated, the spare space formed between the electrode assembly 130 and the sealing portion 115 or the portion in which the battery cells 100 are not pressurized (or in contact with) to each other when the battery cells 100 are stacked may be included in the terrace 150 in the embodiment. For example, the terrace 150 may include a section in which the thickness of the battery cell 100 gradually decreases toward the sealing portion 115 side.

In the embodiment, the sealing portion 115 may be disposed on each of the four side surfaces of the battery cell 100, but an embodiment thereof is not limited thereto. For example, the internal space may be sealed by folding a sheet of an exterior material and forming the sealing portion 115 only on the three side surfaces. In this case, the lower case and the upper case may be formed of a sheet of exterior material.

A plurality of electrode tabs 135 in the embodiment may be drawn out from the electrode assembly 130, and the ends of each electrode tabs 135 may be bonded to each other. Hereinafter, the portion connected to the electrode lead 120 of the end of the electrode tab 135 may be referred to as the second bonding portion 135a, and the portion connecting the second bonding portion 135a to the electrode assembly may be referred to as the tap lead-out portion 135b.

The second bonding portion 135a may be bonded to the first bonding portion 120a of the electrode lead 120. For example, the second bonding portion 135a may be stacked on one surface of the first bonding portion 120a to be in surface-contact with the first bonding portion 120a, and may be fastened to the first bonding portion 120a through a method such as welding.

Accordingly, the first bonding portion 120a may be bonded to the surface of both relatively wide surfaces of the second bonding portion 135a. Also, the area of the second bonding portion 135a may be similar to that of the first bonding portion 120a.

Another surface of the second bonding portion 135a may be disposed to oppose the electrode assembly 130. To this end, the electrode tab 135 may be bent along the boundary between the second bonding portion 135a and the tap lead-out portion 135b, and accordingly, the electrode tab 135 may include a bending line M separating the second bonding portion 135a and the tap lead-out portion 135b.

The second bonding portion 135a may be disposed parallel to one surface from which the electrode tab 135 of the electrode assembly 130 is drawn out. Accordingly, at least a portion of the second bonding portion 135a may oppose the tap lead-out portion 135b. In the embodiment, the configuration in which the components are disposed side by side is not limited to the example in which the components are disposed in parallel, and may include all forms in which the components oppose each other or face each other.

In the embodiment, the bending line M of the electrode tab 135 may be disposed in the central portion of the thickness range of the electrode assembly 130. Accordingly, the end of the second bonding portion 135a may be disposed on the edge side of the electrode assembly 130.

The electrode lead 120 may include a positive lead 120c and a negative lead 120d. The positive lead 120c and the negative lead 120d may protrude from both side surfaces of the case 110 and may be connected to the electrode tab 135 of the electrode assembly 130.

The positive lead and negative lead 120c and 120d may be formed of metal in the form of a thin plate. For example, the positive lead 120c may be formed of aluminum (Al) material, and the negative lead 120d may be formed of copper (Cu) material. However, an embodiment thereof is not limited thereto.

In the embodiment, the positive and negative leads 120a and 120b may be disposed to be directed in opposite directions. However, an embodiment thereof is not limited thereto, and various modifications may be made if desired, such as disposing the positive lead 120c and the negative lead 120d to be oriented in the same direction.

The electrode lead 120 in the embodiment may include a first bonding portion 120a and a lead-out portion 120b.

The first bonding portion 120a may be configured to be bonded to the second bonding portion 135a of the electrode tab 135, and may refer to a region disposed close to the electrode assembly 130 of the electrode lead 120.

Also, the lead-out portion 120b may be a region configured to extend in a direction away from the electrode assembly 130 in the first bonding portion 120a, and at least the portion may be disposed externally of the case 110.

In the embodiment, the first bonding portion 120a and the lead-out portion 120b may not be disposed on the same plane. Specifically, the first bonding portion 120a and the lead-out portion 120b may be disposed to have an angle of less than 180° (θ in FIG. 3) therebetween. In the embodiment, an angle θ between the first bonding portion 120a and the lead-out portion 120b may be approximately 90°. Also, the surface direction of the second bonding portion 135a may be parallel to the thickness direction of the electrode assembly 130.

Accordingly, the lead-out portion 120b may be disposed parallel to the thickness direction of the thickness direction of the electrode assembly 130. However, an embodiment thereof is not limited thereto.

The electrode lead 120 may be formed of a sheet of metal. Accordingly, to satisfy the above structure, at least a portion of the electrode lead 120 may be bent. For example, the electrode lead 120 in the embodiment may include at least one bending line L, and the first bonding portion 120a and the lead-out portion 120b may be distinct from each other by the bending line L as a boundary.

The first bonding portion 120a may be disposed such that at least a portion thereof may oppose the electrode assembly 130. For example, the first bonding portion 120a may be disposed side by side with the side surface of the electrode assembly.

The second bonding portion 135a of the electrode tab 135 may be bonded to the first bonding portion 120a of the electrode lead 120. Specifically, the second bonding portion 135a may in surface-contact with and bonded to one surface opposing the electrode assembly 130 among both surfaces of the first bonding portion 120a. Accordingly, the second bonding portion 135a may be disposed between the electrode assembly 130 and the first bonding portion 120a.

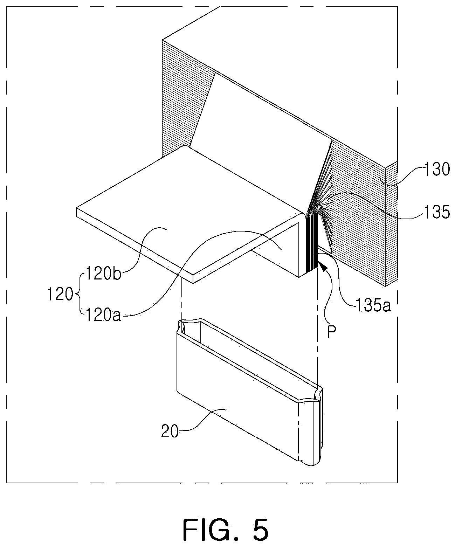

Hereinafter, a portion in which the second bonding portion 135a and the first bonding portion 120a are bonded to each other will be collectively referred to as a bonding portion (P in FIG. 5). Accordingly, the bonding portion P may include the first bonding portion 120a and the second bonding portion 135a.

The bonding portion P in the embodiment may be disposed within the thickness range of the electrode assembly 130. Accordingly, the battery cell 100 in the embodiment may reduce the size of the terrace 150.

Differently from the embodiment, when the entire electrode lead 120 is formed to be planar, that is, when the second bonding portion 120a is disposed on the same plane as the lead-out portion 120b, the width of the terrace 150 may need to be larger than that of the bonding portion P. Accordingly, in this case, since the width of the terrace 150 may not be less than the width of the bonding portion P, there is a limitation in reducing the terrace 150.

When the bonding portion P is disposed to oppose the side surface of the electrode assembly 130 by bending the electrode lead 120 and the electrode tab 135 as in the embodiment, the bonding portion P may be disposed side by side with the side surface of the electrode assembly 130, and accordingly, the width of the terrace 150 may be configured regardless of the width of the bonding portion P. Here, the side surface of the electrode assembly 130 disposed side by side with the bonding portion P may refer to the surface (hereinafter, a tab lead-out surface) from which the electrode tab 135 is drawn out among several surfaces forming the electrode assembly 130.

Also, when the bonding portion P is disposed side by side with the side surface of the electrode assembly 130 as in the embodiment, the bonding portion P may be disposed in close contact with the electrode assembly 130, such that the distance between the bonding portion P and the electrode assembly 130 may be reduced. Accordingly, the size of the terrace 150 may be reduced, and accordingly, energy density of the battery cell may be improved. In the embodiments, the end of the second bonding portion 135a may be disposed to be directed to the edge side of the first bonding portion 120a, rather than the bending line of the electrode lead 120. That is, the end of the second bonding portion 135a may be disposed to oppose in the opposite direction, rather than the direction in which the bending line is formed, and accordingly, the end of the electrode tab 135 and the end of the electrode lead 120 may be disposed to be oriented in the same direction in the bonding portion P.

In this case, both the bending line M of the electrode tab 135 and the bending line L of the electrode lead 120 may be disposed in the central portion (based on the thickness range) of the electrode assembly 130. Accordingly, the the electrode tab 135 and/or the electrode lead 120 may be easily applied to a case in which an accommodation space 113 is provided, such as the upper case 110a and the lower case 110b illustrated in FIG. 2.

Also, the battery cell 100 in the embodiment may include at least one protective member 20.

FIG. 4 is an enlarged perspective diagram illustrating an electrode assembly and an electrode lead illustrated in FIG. 2. FIG. 5 is an exploded perspective diagram illustrating a portion of the example in FIG. 4.

Referring to FIGS. 4 and 5 together, the protective member 20 in the embodiment may accommodate the bonding portion P therein. The protective member 20 may be bonded to the bonding portion P so as to cover a portion or the entirety of the bonding portion P, and accordingly, at least a portion of the bonding portion P may not be exposed externally of the protective member 20.

The bonding portion P may be formed by welding the electrode lead 120 to the electrode tab 135, and in this process, unnecessary foreign substances or burrs may be formed on the bonding portion P. Such foreign substances or burr may be in contact with the electrode assembly 130 or the case 110 and may damage the electrode assembly 130 or the case 110. Accordingly, in the battery cell 100 in the embodiment, the above issue may be addressed by covering the surface of the bonding portion P with the protective member 20.

To this end, the protective member 20 may be formed by a material not affected by the electrolyte of the battery cell 100 and having electrical insulating properties such as resin.

In the embodiment, the protective member 20 may be formed using an insulating tape. For example, the protective member 20 may be formed by attaching an insulating tape to the entirety or a portion of the surface of the bonding portion P. In this case, the insulating tape may be attached to the bonding portion P by surrounding the lower end of the bonding portion P with reference to FIG. 3 or may be attached to each of both surfaces of the bonding portion P.

However, an embodiment thereof is not limited thereto. For example, the protective member 20 may be formed by coating the surface of the bonding portion P with a liquid insulating resin, or the protective member 20 may be formed in the form of a rigid cover for accommodating the bonding portion P therein as in the embodiment described later.

The protective member 20 may be stacked on both surfaces of the bonding portion P. Accordingly, at least a portion of the protective member 20 may be disposed between the electrode tab 135 and the electrode assembly 130 to prevent contact between the electrode tab 135 and the electrode assembly 130, and at least a portion may be disposed between the electrode lead 120 and the case 110 to prevent contact therebetween.

Since the protective member 20 is disposed within the terrace 150, the protective member 20 may be configured to have a size to be able to be accommodated in the space formed by the terrace 150. For example, the protective member 20 may have various sizes and shapes as long as the protective member 20 may cover the bonding portion P within the internal space of the terrace 150.

Meanwhile, as described above, in the battery cell 100 in the embodiment, the end of the electrode tab 135 and the end of the electrode lead 120 may be disposed to be oriented in the same direction in the bonding portion P.

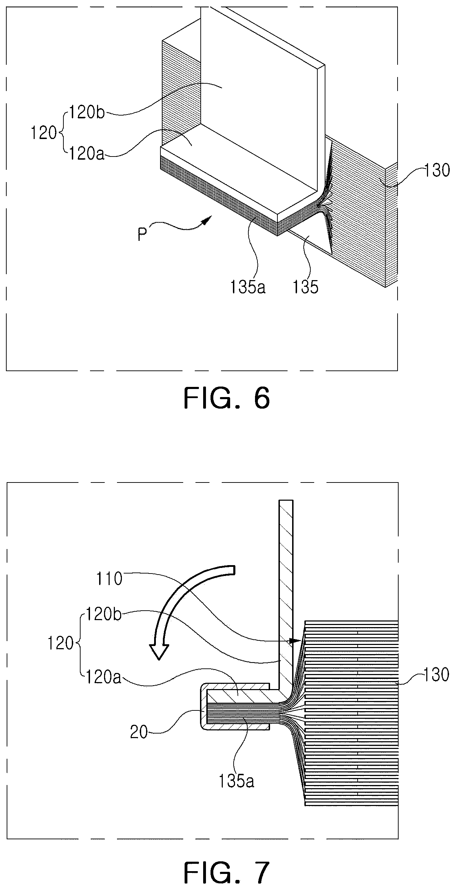

In this case, in addition to both wide surfaces of the bonding portion P, the protective member 20 may be disposed on three side surfaces of the bonding portion P exposed to the outside. Accordingly, the bonding portion P may be effectively protected. Also, as illustrated in FIG. 6 described later, the bonding portion P may be disposed to protrude during the process of manufacturing the battery cell, such that the process of attaching the protective member 20 to the bonding portion P may be easily performed.

Meanwhile, as described above, in the embodiment, the protective member 20 may be disposed to cover three side surfaces of the bonding portion P. However, an embodiment thereof is not limited thereto, and, if desired, the protective member 20 may not be disposed on at least one side surface of the three side surfaces of the bonding portion P. For example, among the three side surfaces of the bonding portion P, the side surface formed by the end of the electrode tab 135 and the end of the electrode lead 120 may be disposed relatively close to the case 110, such that the protective member 20 may be disposed only on the side surface and the protective member 20 may not be provided on the other side surface.

In the description below, the method of manufacturing a battery cell according to the embodiment will be described.

FIGS. 6 and 7 are diagrams illustrating a method of manufacturing the battery cell illustrated in FIG. 1.

In the method of manufacturing a battery cell in the embodiment, a process of forming a first bonding portion 120a and a lead-out portion 120b by bending the electrode lead 120 with respect to the bending line (L in FIG. 3) may be performed. As described above, the first bonding portion 120a and the lead-out portion 120b may be bent to have an angle θ of less than 180°, and in the embodiment, an angle θ between the first bonding portion 120a and the lead-out portion 120b may be approximately 90°.

Thereafter, as illustrated in FIG. 6, the first bonding portion 120a of the electrode lead 120 may be seated on the second bonding portion 135a of the electrode tab 135. To this end, a process of bonding the ends of the electrode tabs 135 to each other to form the second bonding portion 135a may be preferentially performed. Also, since the lengths of the electrode tabs 135 drawn out from the electrode assembly 130 are different, when the ends of the electrode tabs 135 are bonded to each other, the ends of the electrode tabs 135 may not coincide with each other. Accordingly, a process of partially cutting the end of the second bonding portion 135a may be preferentially performed to trim the end of the electrode tabs 135.

Thereafter, a bonding portion P may be formed by bonding the second bonding portion 135a to the first bonding portion 120a through a method such as welding. Ultrasonic welding may be used to bond the second bonding portion 135a to the first bonding portion 120a, but an embodiment thereof is not limited thereto.

As illustrated in FIG. 6, in the embodiment, the end of the electrode tab 135 and the end of the electrode lead 120 may be stacked to be oriented in the same direction. Accordingly, since each of the second bonding portion 135a and the first bonding portion 120a has a shape protruding to the outside, welding of the second bonding portion 135a to the first bonding portion 120a may be easily performed.

Thereafter, disposing a protective member 20 formed of an insulating material on the surface of the bonding portion P may be performed. As described above, the protective member 20 in the embodiment may be formed using insulating tape. Accordingly, in this process, a process of covering the bonding portion P with an insulating tape may be performed.

As illustrated in FIG. 7, the protective member 20 may be attached to the bonding portion P while surrounding the end of the electrode tab 135 and the end of the electrode lead 120 together. However, an embodiment thereof is not limited thereto, and, as described above, a liquid insulating resin may be applied to the surface of the bonding portion P and may be cured to form the protective member 20, or as in the embodiments described below, a protective member 20 may be formed to have rigidity, may be inserted into the bonding portion P and may be bond to the bonding portion P.

Thereafter, disposing the electrode lead 120 for the bonding portion P to oppose the electrode assembly 130 may be performed. This process may include rotating the electrode lead 120 (in the direction of an arrow in FIG. 7) using the bending line L of the electrode lead 120 as a rotational axis. Accordingly, as illustrated in FIG. 4, the bonding portion P may be disposed within the thickness range of the electrode assembly 130, and the lead-out portion 120b may be disposed side by side with the surface direction of the electrode assembly 130.

Thereafter, the battery cell illustrated in FIG. 1 may be formed by combining the case 110 with the electrode assembly 130.

In the battery cell 100 in the embodiment configured as described above, the bonding portion P to which the electrode lead 120 and the electrode tab 135 are coupled may be side by side with the tap lead-out surface of the electrode assembly 130. Accordingly, the distance between the electrode assembly 130 and the bonding portion P may be reduced, such that the corresponding width of the terrace 150 may be reduced, and accordingly, energy density of the battery cell 100 may be improved.

However, an embodiment thereof is not limited to the aforementioned embodiment and various modifications may be made.

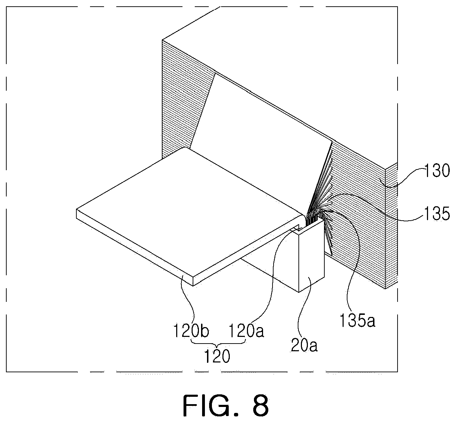

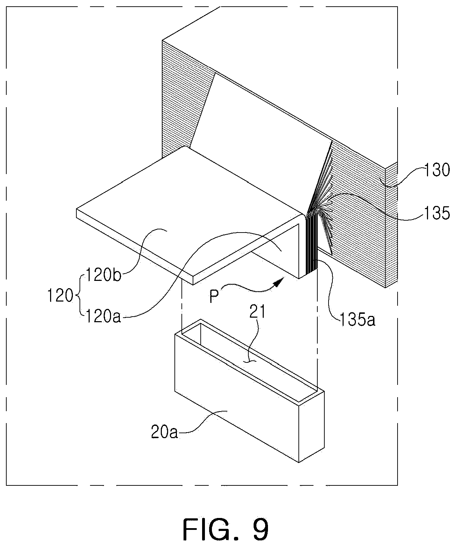

FIG. 8 is a perspective diagram illustrating a portion of a battery cell according to another embodiment. FIG. 9 is an exploded perspective diagram illustrating the battery cell illustrated in FIG. 8.

Referring to FIGS. 8 and 9, the protective member 20a in the embodiment may be formed of a rigid material such as plastic rather than a soft material such as tape. Here, the rigid material may refer to a material not easily deformed by an external force or may be swiftly restored to an original shape thereof even when deformed.

The protective member 20a in the embodiment may be formed of an insulating material having rigidity for withstanding the internal pressure of the battery cell without being affected by the electrolyte of the battery cell. For example, the protective member 20a may be formed of a resin material, but an embodiment thereof is not limited thereto.

A pocket-shaped accommodation space is formed in the protective member 20a, and a bonding portion P may be inserted into the accommodation space. Accordingly, an opening 21 through which the bonding portion P is inserted into the accommodation space is provided in one surface of the protective member 20.

In the protective member 20a in the present invention, the protective member 20a is coupled to the bonding portion P only by inserting the bonding portion P into the accommodation space of the protective member 20a through the opening 21. Accordingly, the manufacturing may be easily performed and manufacturing time may be reduced.

As illustrated in FIG. 3 and the like, in the above-described embodiments, the electrode tab 135 may be configured to be bent at the central portion (based on the thickness range) of the electrode assembly 130. However, an embodiment thereof is not limited thereto, and the electrode tab 135 may be bent at the edge side (based on the thickness range) of the electrode assembly 130 such that the end of the second bonding portion 135a is directed to the central portion of the electrode assembly 130.

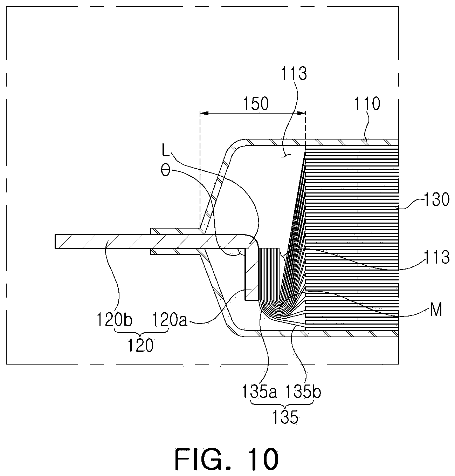

FIG. 10 is a cross-sectional diagram illustrating a portion of a battery cell according to another embodiment.

Referring to FIG. 10, the electrode tab 135 in the embodiment may be bent in a position close to a surface of both wide surfaces of the electrode assembly 130. Accordingly, the end of the second bonding portion 135a may be disposed in the central portion of the thickness range of the electrode assembly 130.

In this case, when the bonding portion P is formed such that the end of the electrode tab 135 and the end of the electrode lead 120 is oriented in the same direction as in the above-described embodiments, the lead-out portion 120b of the electrode lead 120 may be difficult to be disposed in the central portion (based on the thickness range) of the electrode assembly 130. Accordingly, when the electrode tab 135 is bent in a position shifted toward one side of the electrode assembly 130 as in the embodiment, the electrode tab 135 and the electrode lead 120 may be disposed such that the ends thereof may be directed in opposite directions and may be bonded to each other.

Accordingly, in the embodiment, the end of the second bonding portion 135a may be disposed in a position adjacent to the bending line L of the electrode lead 120, and the end of the first bonding portion 120a may be disposed in a position adjacent to the bending line M of the electrode tab 135.

Although not illustrated, the battery cell in the embodiment may also include the aforementioned protective member (20 in FIG. 3).

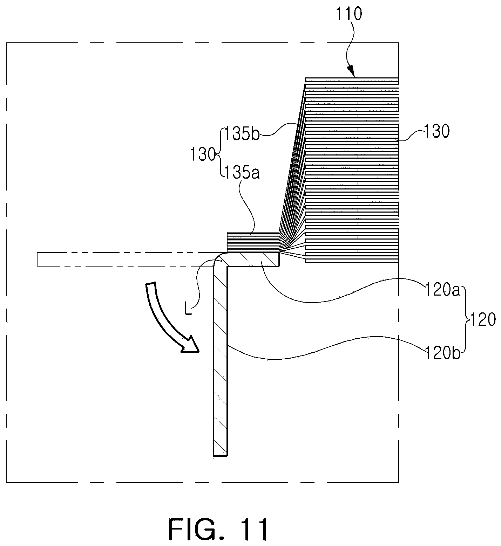

FIG. 11 is a diagram illustrating a method of manufacturing the battery cell illustrated in FIG. 10.

Referring to FIG. 11, in the method of manufacturing a battery cell in the embodiment, a process of bonding the first bonding portion 120a of the electrode lead 120 to the second bonding portion 135a of the electrode tab 135 may be preferentially performed. For example, the bonding portion P may be formed by bonding the second bonding portion 135a to the first bonding portion 120a to each other through a method such as welding. As described above, ultrasonic welding may be used to bond the second bonding portion 135a to the first bonding portion 120a, but an embodiment thereof is not limited thereto.

In this process, the electrode lead 120 may be bonded to the electrode tab 135 in a position shifted to one side with respect to the thickness range of the electrode assembly. Also, the electrode tab 135 and the electrode lead 120 may be disposed such that the ends thereof may be directed in opposite directions and may be bonded to each other.

Thereafter, a process of forming a first bonding portion 120a and a lead-out portion 120b by bending the electrode lead 120 with respect to the bending line L may be performed. As described above, the first bonding portion 120a and the lead-out portion 120b may be bent to have an angle of less than 180° (θ in FIG. 10) therebetween, and in the embodiment, an angle θ between the first bonding portion 120a and the lead-out portion 120b may be approximately 90°.

Thereafter, as illustrated in FIG. 10, a process of arranging the electrode lead 120 within the thickness range of the bonding portion P of the electrode assembly 130 may be performed. This process may include bending the electrode tab 135 along the bending line M of the electrode tab 135. Accordingly, as illustrated in FIG. 10, the bonding portion P may be disposed within the thickness range of the electrode assembly 130, and the lead-out portion 120b may be disposed side by side with the surface direction of the electrode assembly 130. Also, the lead-out portion 120b of the electrode lead 120 may be disposed in the central portion (based on the thickness range) of the electrode assembly 130.

Thereafter, the battery cell illustrated in FIG. 10 may be formed by combining the case 110 with the electrode assembly 130.

As described above, in the battery cell in the embodiment, the lead-out portion 120b of the electrode lead 120 may be disposed on the central portion (based on the thickness range) of the electrode assembly 130 regardless of the welding direction of the lead-out portion 120b of the electrode lead 120, such that the battery cell may be easily applied to the case 110 in which the accommodation space is provided in both the upper case 110a and the lower case 110b.

According to the aforementioned embodiments, the width of the terrace on which the electrode tab is disposed may be reduced, such that energy density of the battery cell may be improved.

## Claims

1. A battery cell (100), comprising:
an electrode assembly (130);
an electrode tab (135) drawn out from one surface of the electrode assembly (130);
an electrode lead (120) to which the electrode tab (135) is coupled;
a protective member (20, 20a) formed of an insulating material and covering a surface of a bonding portion (P);
wherein the bonding portion (P) in which the electrode tab and the electrode lead are bonded to each other is disposed to face the one surface of the electrode assembly (130), and
wherein, in the bonding portion (P), an end of the electrode tab (135) and an end of the electrode lead (120) are disposed to be oriented in the same direction, and
wherein the protective member (20, 20a) has an accommodation space in a form of a pocket, and the bonding portion (P) is inserted into and disposed in the accommodation space through an opening (21) provided in the protective member (20, 20a).

2. The battery cell (100) of claim 1, wherein the protective member (20, 20a) surrounds an end of the electrode tab (135) and an end of the electrode lead (120) and is coupled to the bonding portion (P).

3. The battery cell (100) of claims 1 or 2, wherein at least a portion of the protective member (20, 20a) is disposed between the bonding portion (P) and the electrode assembly (130).

4. The battery cell (100) of any one of claims 1 to 3, further comprising:
a case (110) accommodating the electrode assembly (130) and the protective member (20, 20a) therein,
wherein at least a portion of the electrode lead (120) is disposed externally of the case (110).

5. The battery cell (100) of any one of claims 1 to 4, wherein the bonding portion (P) includes a second bonding portion (135a) formed on an end of the electrode tab (135) and a first bonding portion (120a) bonded to and in surface-contact with the second bonding portion (135a) of the electrode lead (120).

6. The battery cell (100) of claim 5,
wherein the electrode lead (120) further includes a lead-out portion (120b) extending from the first bonding portion (120a) and having at least a portion disposed externally of the case (110), and
wherein the first bonding portion (120a) and the lead-out portion (120b) are disposed to have an angle of less than 180° therebetween.

7. A method of manufacturing a battery cell (100), the method comprising:
preparing an electrode lead (120) bent along a bending line and divided into a first bonding portion (120a) and a lead-out portion (120b);
stacking an end of an electrode tab (135) drawn out from one surface of an electrode assembly (130) on the first bonding portion (120a) of the electrode lead (120);
bonding the electrode tab (135) to the first bonding portion (120a);
disposing a bonding portion (P) in which the electrode tab (135) and the first bonding portion (120a) are bonded to each other to face the one surface of the electrode assembly (130), and coupling a protective member (20, 20a) formed of an insulating material to the bonding portion (P),
wherein the protective member (20, 20a) has an accommodation space in a form of a pocket, and the bonding portion (P) is inserted into and disposed in the accommodation space through an opening (21) provided in the protective member (20, 20a).

8. The method of manufacturing a battery cell (100) of claim 7, wherein the stacking an end of an electrode tab (135) drawn out from one surface of an electrode assembly (130) on the first bonding portion (120a) of the electrode lead (120) includes stacking an end of the electrode tab (135) and an end of the electrode lead (120) to be oriented in the same direction in the bonding portion (P).

9. The method of manufacturing a battery cell (100) of claim 7 or 8, wherein the disposing the bonding portion (P) in which the electrode tab (135) and the first bonding portion (120a) are bonded to each other to oppose the electrode assembly (130) includes disposing the first bonding portion (120a) side by side with the one surface of the electrode assembly (130) by rotating the electrode lead (120).

## Patentansprüche

1. Batteriezelle (100), umfassend:
eine Elektrodenanordnung (130);
eine Elektrodenlasche (135), die aus einer Oberfläche der Elektrodenanordnung (130) herausgezogen ist;
eine Elektrodenleitung (120), mit der die Elektrodenlasche (135) verbunden ist;
ein Schutzelement (20, 20a), das aus einem isolierenden Material gebildet ist und eine Oberfläche eines Verbindungsabschnitts (P) bedeckt;
wobei der Verbindungsabschnitt (P), in dem die Elektrodenlasche und die Elektrodenleitung miteinander verbunden sind, so angeordnet ist, dass er der einen Oberfläche der Elektrodenanordnung (130) zugewandt ist, und
wobei in dem Verbindungsabschnitt (P) ein Ende der Elektrodenlasche (135) und ein Ende der Elektrodenleitung (120) so angeordnet sind, dass sie in die gleiche Richtung ausgerichtet sind, und
wobei das Schutzelement (20, 20a) einen Aufnahmeraum in Form einer Tasche aufweist und der Verbindungsabschnitt (P) durch eine Öffnung (21), die in dem Schutzelement (20, 20a) vorgesehen ist, in den Aufnahmeraum eingeführt und in diesem angeordnet ist.

2. Batteriezelle (100) gemäß Anspruch 1, wobei das Schutzelement (20, 20a) ein Ende der Elektrodenlasche (135) und ein Ende der Elektrodenleitung (120) umgibt und mit dem Verbindungsabschnitt (P) verbunden ist.

3. Batteriezelle (100) gemäß Anspruch 1 oder 2, wobei mindestens ein Abschnitt des Schutzelements (20, 20a) zwischen dem Verbindungsabschnitt (P) und der Elektrodenanordnung (130) angeordnet ist.

4. Batteriezelle (100) gemäß einem der Ansprüche 1 bis 3, ferner umfassend:
ein Gehäuse (110), das die Elektrodenanordnung (130) und das Schutzelement (20, 20a) darin aufnimmt,
wobei mindestens ein Abschnitt der Elektrodenleitung (120) außerhalb des Gehäuses (110) angeordnet ist.

5. Batteriezelle (100) gemäß einem der Ansprüche 1 bis 4, wobei der Verbindungsabschnitt (P) einen zweiten Verbindungsabschnitt (135a), der an einem Ende der Elektrodenlasche (135) ausgebildet ist, und einen ersten Verbindungsabschnitt (120a), der mit dem zweiten Verbindungsabschnitt (135a) der Elektrodenleitung (120) verbunden ist und mit diesem in Oberflächenkontakt steht, umfasst.

6. Batteriezelle (100) gemäß Anspruch 5,
wobei die Elektrodenleitung (120) ferner einen Ausleitungsabschnitt (120b) umfasst, der sich von dem ersten Verbindungsabschnitt (120a) erstreckt und mindestens einen Abschnitt aufweist, der außerhalb des Gehäuses (110) angeordnet ist, und
wobei der erste Verbindungsabschnitt (120a) und der Ausleitungsabschnitt (120b) so angeordnet sind, dass sie einen Winkel von weniger als 180° dazwischen aufweisen.

7. Verfahren zum Herstellen einer Batteriezelle (100), wobei das Verfahren umfasst:
Vorbereiten einer Elektrodenleitung (120), die entlang einer Biegelinie gebogen und in einen ersten Verbindungsabschnitt (120a) und einen Ausleitungsabschnitt (120b) unterteilt ist;
Stapeln eines Endes einer Elektrodenlasche (135), die aus einer Oberfläche einer Elektrodenanordnung (130) herausgezogen ist, auf den ersten Verbindungsabschnitt (120a) der Elektrodenleitung (120);
Verbinden der Elektrodenlasche (135) mit dem ersten Verbindungsabschnitt (120a);
Anordnen eines Verbindungsabschnitts (P), in dem die Elektrodenlasche (135) und der erste Verbindungsabschnitt (120a) miteinander verbunden sind, so dass sie der einen Oberfläche der Elektrodenanordnung (130) zugewandt sind, und
Verbinden eines Schutzelements (20, 20a), das aus einem isolierenden Material gebildet ist, mit dem Verbindungsabschnitt (P),
wobei das Schutzelement (20, 20a) einen Aufnahmeraum in Form einer Tasche aufweist und der Verbindungsabschnitt (P) durch eine Öffnung (21), die in dem Schutzelement (20, 20a) vorgesehen ist, in den Aufnahmeraum eingeführt und in diesem angeordnet ist.

8. Verfahren zum Herstellen einer Batteriezelle (100) gemäß Anspruch 7, wobei das Stapeln eines Endes einer Elektrodenlasche (135), die aus einer Oberfläche einer Elektrodenanordnung (130) herausgezogen ist, auf den ersten Verbindungsabschnitt (120a) der Elektrodenleitung (120) das Stapeln eines Endes der Elektrodenlasche (135) und eines Endes der Elektrodenleitung (120), so dass sie in dem Verbindungsabschnitt (P) in die gleiche Richtung ausgerichtet sind, umfasst.

9. Verfahren zum Herstellen einer Batteriezelle (100) gemäß Anspruch 7 oder 8, wobei das Anordnen des Verbindungsabschnitts (P), in dem die Elektrodenlasche (135) und der erste Verbindungsabschnitt (120a) miteinander verbunden sind, so dass sie der Elektrodenanordnung (130) gegenüberliegen, das Anordnen des ersten Verbindungsabschnitts (120a) Seite an Seite mit der einen Oberfläche der Elektrodenanordnung (130) durch Drehen der Elektrodenleitung (120) umfasst.

## Revendications

1. Élément de batterie (100) comprenant :
un ensemble d'électrodes (130) ;
une patte d'électrode (135) retirée d'une surface de l'ensemble d'électrodes (130) ;
un fil d'électrode (120) auquel la patte d'électrode (135) est connectée ;
un élément de protection (20, 20a) formé d'un matériau isolant et recouvrant une surface d'une partie de liaison (P) ;
où la partie de liaison (P), dans laquelle la patte d'électrode et le fil d'électrode sont liés l'un à l'autre, est disposée pour faire face à la surface de l'ensemble d'électrodes (130), et
où, dans la partie de liaison (P), une extrémité de la patte d'électrode (135) et une extrémité du fil d'électrode (120) sont disposées pour être orientées dans la même direction, et
où l'élément de protection (20, 20a) a un espace de logement en forme de poche, et la partie de liaison (P) est insérée dans et disposée dans l'espace de logement à travers une ouverture (21) prévue dans l'élément de protection (20, 20a).

2. Élément de batterie (100) selon la revendication 1, où l'élément de protection (20, 20a) entoure une extrémité de la patte d'électrode (135) et une extrémité du fil d'électrode (120) et est connecté à la partie de liaison (P).

3. Élément de batterie (100) selon la revendication 1 ou 2, où au moins une partie de l'élément de protection (20, 20a) est disposée entre la partie de liaison (P) et l'ensemble d'électrodes (130).

4. Élément de batterie (100) selon l'une quelconque des revendications 1 à 3, comprenant en outre :
un boîtier (110) recevant l'ensemble d'électrodes (130) et l'élément de protection (20, 20a) dans celui-ci,
où au moins une partie du fil d'électrode (120) est disposée à l'extérieur du boîtier (110).

5. Élément de batterie (100) selon l'une quelconque des revendications 1 à 4, où la partie de liaison (P) comprend une deuxième partie de liaison (135a) formée à une extrémité de la patte d'électrode (135) et une première partie de liaison (120a) liée à et en contact de surface avec la deuxième partie de liaison (135a) du fil d'électrode (120).

6. Élément de batterie (100) selon la revendication 5,
où le fil d'électrode (120) comprend en outre une partie de sortie (120b) s'étendant depuis la première partie de liaison (120a) et ayant au moins une partie disposée à l'extérieur du boîtier (110), et
où la première partie de liaison (120a) et la partie de sortie (120b) sont disposées pour avoir un angle inférieur à 180° entre elles.

7. Procédé de fabrication d'un élément de batterie (100), le procédé comprenant :
préparation d'un fil d'électrode (120) plié le long d'une ligne de pliage et divisé en une première partie de liaison (120a) et une partie de sortie (120b) ;
empilement d'une extrémité d'une patte d'électrode (135) retirée d'une surface d'un ensemble d'électrodes (130) sur la première partie de liaison (120a) du fil d'électrode (120) ;
liaison de la patte d'électrode (135) à la première partie de liaison (120a) ;
disposition d'une partie de liaison (P), dans laquelle la patte d'électrode (135) et la première partie de liaison (120a) sont liées l'une à l'autre, pour faire face à la surface de l'ensemble d'électrodes (130), et
couplage d'un élément de protection (20, 20a) formé d'un matériau isolant à la partie de liaison (P),
où l'élément de protection (20, 20a) a un espace de logement en forme de poche,
et la partie de liaison (P) est insérée dans et disposée dans l'espace de logement à travers une ouverture (21) prévue dans l'élément de protection (20, 20a).

8. Procédé de fabrication d'un élément de batterie (100) selon la revendication 7, où l'empilement d'une extrémité d'une patte d'électrode (135) retirée d'une surface d'un ensemble d'électrodes (130) sur la première partie de liaison (120a) du fil d'électrode (120) comprend empiler une extrémité de la patte d'électrode (135) et d'une extrémité du fil d'électrode (120) pour être orientées dans la même direction dans la partie de liaison (P).

9. Procédé de fabrication d'un élément de batterie (100) selon la revendication 7 ou 8, où le couplage de la partie de liaison (P), dans laquelle la patte d'électrode (135) et la première partie de liaison (120a) sont liées l'une à l'autre pour faire face à l'ensemble d'électrodes (130), comprend disposer la première partie de liaison (120a) côte à côte avec la surface de l'ensemble d'électrodes (130) en faisant tourner le fil d'électrode (120).
